# EUROPEAN PATENT APPLICATION

(11) **EP 3 553 661 A1**
(43) Date of publication of application: **16.10.2019**
(21) Application number: 18189128.4
(22) Date of filing: 15.08.2018
(51) Int. Cl.: G06F 11/10

(54) **APPARATUSES AND COMPUTER PROGRAM PRODUCTS FOR A REDUNDANT ARRAY OF INDEPENDENT DISK (RAID) RECONSTRUCTION**

(30) Priority: 15.04.2018 US 201862657895 P
(71) Applicant: Synology Incorporated, Taipei 103 (TW)
(72) Inventor: CHANG, Ping-Chun, 103 Taipei (TW); LIN, Chieh, 103 Taipei (TW)
(74) Representative: Viering, Jentschura & Partner mbB Patent- und Rechtsanwälte

(57) **Abstract**

The invention introduces an apparatus for a redundant array of independent disk (RAID) reconstruction, at least including a RAID group and a processing unit (110; 1410). The processing unit (110; 1410) starts an unused-space scan procedure to determine a logical address range that is a candidate to be skipped for the RAID group and send the logical address range to a stripe reconstruction procedure; and starts the stripe reconstruction procedure to receive the logical address range from the unused-space scan procedure, determine a stripe (230-1; 230-2; 230-3; 230-4; 330-1; 330-2; 330-3; 330-4; 1230-1; 1230-2; 1230-3; 1230-4) of drives of the RAID group to be skipped from being reconstructed according to the logical address range, and omit a reconstruction to the determined strip.

## Description

### BACKGROUND

The present invention relates to an apparatus and related non-transitory computer program product for a redundant array of independent disk (RAID) reconstruction as defined in independent claims 1 and 15.

A storage system typically includes one or more storage devices, such as hard disks (HDs), solid state disks (SSDs), into which data may be written, and from which the data may be read, as desired. The operating system (OS) may implement a high-level module, such as a file system, to logically organize the information stored on the devices as storage containers, such as files. Data is distributed across the drives in one of several ways, referred to as redundant array of independent disk (RAID) levels, depending on the required level of redundancy and performance. The different data distribution layouts are named by the word "RAID" followed by a number, such as RAID 0, RAID 1, RAID 5, RAID 6, etc. RAID levels greater than RAID 0 provide protection against unrecoverable sector read errors, as well as against failures of whole physical drives. Upon failure of one physical drive, the failed drive is replaced with a new one and a RAID rebuild is performed. Data or parity information of each chunk of the new drive is calculated based on data, parity information, or the combination of the other chunks within the same stripe. It typically takes hours or even the whole day to perform the RAID rebuild. Thus, it is desirable to have apparatuses and methods and computer program products for a RAID rebuild to shorten the rebuild time.

This in mind, the present invention aims at providing an apparatus that reduces time for a RAID reconstruction.

This is achieved by an apparatus according to claim 1. The dependent claims pertain to corresponding further development and improvements.

As will be seen more clearly from the detailed description following below, the claimed apparatus includes a processing unit that starts an unused-space scan procedure to determine a logical address range that is a candidate to be skipped for the RAID group and send the logical address range to a stripe reconstruction procedure, so as to shorten RAID reconstruction time.

Both the foregoing general description and the following detailed description are examples and explanatory only, and are not restrictive of the invention as claimed.

In the following, the invention is further illustrated by way of example, taking reference to the accompanying drawings. Thereof
FIG. 1 is the system architecture of a storage system according to an embodiment of the invention,
FIG. 2 is a schematic diagram illustrating a redundant array of independent disk (RAID) 5 rebuild according to an embodiment of the invention,
FIG. 3 is a schematic diagram illustrating a rebuild process for converting a RAID 5 storage to a RAID 6 storage according to an embodiment of the invention,
FIG. 4 is a schematic diagram illustrating a RAID rebuild process in some implementations,
FIG. 5 is a schematic diagram of software configurations according to embodiments of the invention,
FIG. 6 is schematic diagram of the software architecture according to embodiments of the invention,
FIG. 7 is a schematic diagram illustrating a binary tree combining with bitmaps according to an embodiment of the invention,
FIG. 8 is a flowchart illustrating a method for scanning unused regions, performed by a FS unused-scanner or an intermediary unused-scanner when being loaded and executed by a processing unit, according to an embodiment of the invention,
FIG. 9 is a flowchart illustrating a method for marking unused chunks, performed by a handler when being loaded and executed by a processing unit, according to an embodiment of the invention,
FIG. 10 is a flowchart illustrating a method for reconstructing stripes of a RAID group, performed by a RAID manager when being loaded and executed by a processing unit, according to an embodiment of the invention,
FIG. 11 is a flowchart illustrating a method for a RAID reconstruction, performed by an application when being loaded and executed by a processing unit, according to an embodiment of the invention,
FIG. 12 is a schematic diagram illustrating a RAID expansion process for adding a new drive to a RAID 5 group according to an embodiment of the invention,
FIG. 13 is a schematic diagram of the network architecture according to an embodiment of the invention,
FIG. 14 is the system architecture of a client according to an embodiment of the invention, and
FIG. 15 is a schematic diagram of software configurations employed in a distributed replicated storage system according to embodiments of the invention.

Reference is made in detail to embodiments of the invention, which are illustrated in the accompanying drawings. The same reference numbers may be used throughout the drawings to refer to the same or like parts, components, or operations.

The present invention will be described with respect to particular embodiments and with reference to certain drawings, but the invention is not limited thereto and is only limited by the claims. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having the same name (but for use of the ordinal term) to distinguish the claim elements.

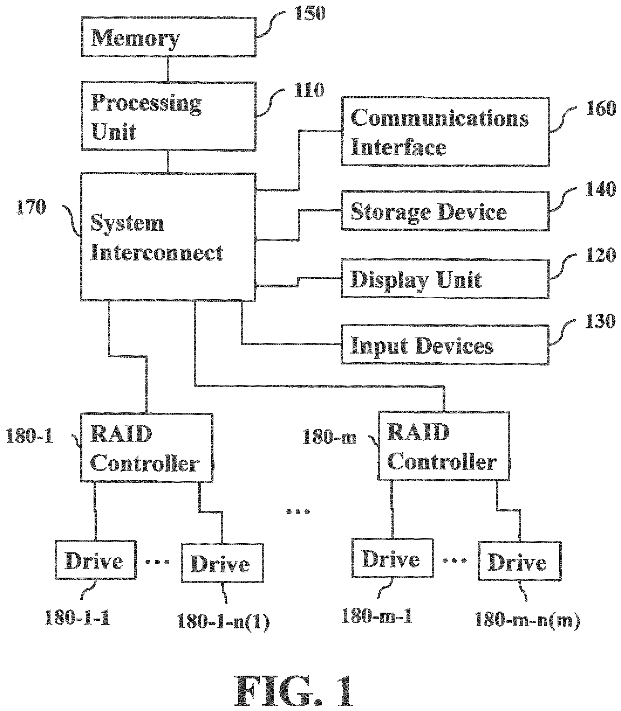

Embodiments of a storage system may be practiced in a file server, a database server, a network attached storage (NAS) server or others. One or more clients may connect to the storage system via networks including a local area network (LAN), a wireless telephony network, the Internet, a personal area network (PAN) or any combination thereof. FIG. 1 is the system architecture of a storage system according to an embodiment of the invention. The processing unit 110 may be implemented in numerous ways, such as with dedicated hardware, or with general-purpose hardware (e.g., a single processor, multiple processors or graphics processing units capable of parallel computations, or others) that is programmed using microcode or software instructions to perform the functions recited herein. The processing unit 110 may contain at least an arithmetic logic unit (ALU) and a bit shifter. The ALU is multifunctional device that can perform both arithmetic and logic function. The ALU is responsible for performing arithmetic operations, such as add, subtraction, multiplication, division, or others, Boolean operations, such as AND, OR, NOT, NAND, NOR, XOR, XNOR, or others, and mathematical special functions, such as trigonometric functions, a square, a cube, a power of n, a square root, a cube root, a n-th root, or others. Typically, a mode selector input decides whether ALU performs a logic operation or an arithmetic operation. In each mode different functions may be chosen by appropriately activating a set of selection inputs. The bit shifter is responsible for performing bitwise shifting operations and bitwise rotations. The system architecture further includes a memory 150 for storing necessary data in execution, such as variables, data tables, data abstracts, a wide range of indices, or others. The memory 150 may be a random access memory (RAM) of a particular type that provides volatile storage space. The processing unit 110 may connect to a communications interface 160, a storage device 140, a display unit 120, one or more input devices 130, one or more redundant array of independent disk (RAID) controllers 180-1 to 180-m via a system interconnect 170, where m may be configured to an arbitrary integer greater than 0 depending on different system requirements. The storage device 140 may be practiced in a hard disk (HD) drive, a solid state disk (SSD) drive, or others, to provide non-volatile storage space for storing program codes, such as an operating system (OS), system kernels, drivers, software applications, and user data. The communications interface 160 may be included in the system architecture and the processing unit 110 can thereby communicate with the other electronic equipment. The communications interface 160 may be a local area network (LAN) module, a wireless local area network (WLAN) module, a Bluetooth module, a 2G/3G/4G/5G telephony communications module or any combinations thereof. In an embodiment, the system architecture may include the input devices 130 to receive user input, such as a keyboard, a mouse, a touch panel, or others. A user may press hard keys on the keyboard to input characters, control a mouse pointer on a display by operating the mouse, or control an executed application with one or more gestures made on the touch panel. The gestures include, but are not limited to, a single-click, a double-click, a single-finger drag, and a multiple finger drag. the display unit 120, such as a Thin Film Transistor Liquid-Crystal Display (TFT-LCD) panel, an Organic Light-Emitting Diode (OLED) panel, or others, may also be included to display input letters, alphanumeric characters and symbols, dragged paths, drawings, or screens provided by an application for the user to view. In another embodiment, the input device 130 and the display unit 120 may be optional. For example, in a network-based storage system (such as NAS), the storage system may receive the commands via various network protocols, including but not limited to: Apple Filing Protocol (AFP), Server Message Block (SMB), File Transfer Protocol (FTP), Network File System (NFS), Hypertext Transfer Protocol (HTTP), Hypertext Transfer Protocol (HTTPS), etc. In such embodiments, the network-based storage system can be managed by one or more remote devices through Internet, and therefore, the input device 130 and the display unit 120 are not necessary.

Each RAID controller may access data requested by the processing unit 110 (i.e. the host). The data is stored on drives, for example, the drives 180-1-1 to 180-m-n(1), the drives 180-m-1 to 180-m-n(m), and so on, where each of n(1) to n(m) may be configured to an arbitrary integer greater than 1 depending on different system requirements. Each drive is a non-volatile storage device, such as a hard disk (HD) drive, a solid state disk (SSD) drive, a NOR flash memory drive, or others. Each RAID controller and the connected or coupled drives form a RAID group. In some embodiments, two or more drives (n>=2) may be configured to RAID 1 to consist of data mirroring, without parity or striping. Data is written identically to the two drives, thereby producing a mirrored set of drives. Any read request can be serviced by any drive in the set. In alternative embodiments, two or more drives (n>=2) may be configured to RAID 2 to consist of bit-level striping with dedicated Hamming-code parity. All disk spindle rotation is synchronized and data is striped such that each sequential bit is on a different drive. Hamming-code parity is calculated across corresponding bits and stored on at least one parity drive. In still alternative embodiments, three or more drives (n>=3) may be configured to RAID 5 to consist of chunk-level striping with distributed parity. Parity information is distributed among the drives, requiring all drives but one to be present to operate. Upon failure of a single drive, subsequent reads can be calculated from the distributed parity such that no data is lost. In still alternative embodiments, four or more drives (n>=4) may be configured to RAID 6 to consist of chunk-level striping with double distributed parity. Parity information is distributed among the drives, requiring all drives but two to be present to operate. Double parity provides fault tolerance up to two failed drives. The SSD drive may contain NAND flash cells, e.g., single-level cells (SLCs), multi-level cells (MLCs), triple-level cells (TLCs) or quad-level cells (QLCs), to store data. Each RAID controller may include one or more ports having I/O interface circuitry that couples or connects to the drives. The processing unit 110 may communicate with each RAID controller through a standard protocol, such as USB (Universal Serial Bus), ATA (Advanced Technology Attachment), SATA (Serial ATA), PCI-E (Peripheral Component Interconnect Express) or others. The RAID controller may communicate with the coupled or connected drives using a Double Data Rate (DDR) protocol, such as Open NAND Flash Interface (ONFI), DDR toggle, or others.

In alternative embodiments, the RAID controller may be implemented by software program. In such embodiments, the processing unit 110 may have knowledge of the physical organization of data and parity information within each RAID group. The RAID controllers 180-1 to 180-m, assuming they are hardware RAID controller, may be removed from the system architecture shown in FIG. 1. The drives 180-1-1 to 180-m-n are coupled to the system interconnect 170, and the processing unit 110 may directly drive each of the drives 180-1-1 to 180-m-n to access data through the system interconnect 170.

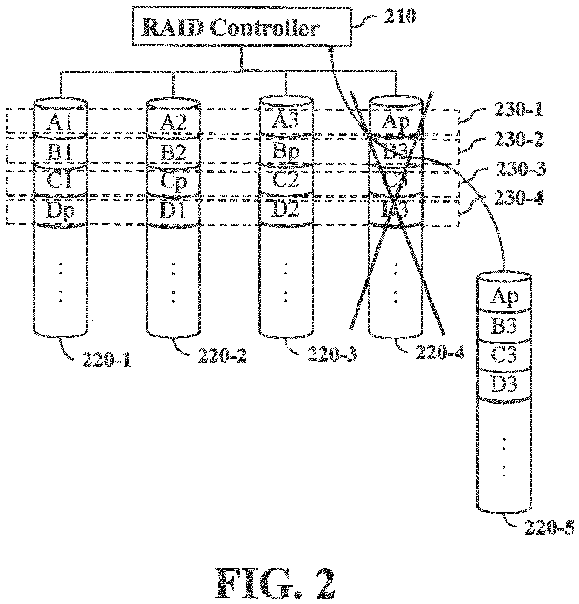

A failover process may be performed upon one drive has failed physically. The failed drive is disconnected from a RAID group and a new drive is added and connected to the RAID group to provide storage services in replacement of the failed one. Then, a file system run on the processing unit 110 may initiate a RAID rebuild process to calculate and write data or parity information into each chunk of the added drive according to data or a combination of data and parity information of the other drives stipe-by-stripe. FIG. 2 is a schematic diagram illustrating a RAID 5 rebuild according to an embodiment of the invention. Assume that a RAID 5 group initially contains drives 220-1 to 220-4 and the storage space of each drive may be segmented into multiple chunks: Each chunk may store a fixed length of data or parity information, such as 32K, 64K, 128K bytes, etc. For example, chunks sequentially store data A1, B1 and C1 (hereinafter referred to as data chunks) and a chunk stores parity information Dp (hereinafter referred to as a parity chunk), and so on. A stripe 230-1 may include a chunk of the drive 220-4 storing parity information Ap associated with data A1 to A3 of the drives 220-1 to 220-3, a stripe 230-2 may include a chunk of the drive 220-3 storing parity information Bp associated with data B1 to B3 of the drives 220-1, 220-2 and 220-4, and so on. The data A1 to A3, B1 to B3, C1 to C3, D1 to D3, and the followings are stored with continuous logical address space within a RAID group. For example, the data A1 is stored in logical addresses 0 to 255, the data A2 is stored in addresses 256 to 511, the data A3 is stored in logical addresses 512 to 767, the data B1 is stored in logical addresses 768 to 1023, and so on. A RAID controller 210 may translate a logical address into a physical location and manage a specified physical drive to read or write data from or into the physical location. For example, for completing a data read command with logical addresses 256 to 511 issued from the processing unit 110, the RAID controller 210 may manage the drive 220-2 to read the data A2 from the first chunk, and reply to the processing unit 110 with the data A2. Once the drive 220-4 is malfunctioned, a new drive 220-5 is taken to replace with the failed one. A RAID rebuild process may be trigged to calculate and store the parity information Ap in view of the data A1 to A3 within the stripe 230-1, the data B3 in view of the data B1 and B2 and the parity information Bp, and so on. Although embodiments of the invention illustrate a RAID 5 failover, those artisans may apply the invention to a failover for a RAID 1, 2 or 6 group, or others, with relevant modifications and the invention should not be limited thereto.

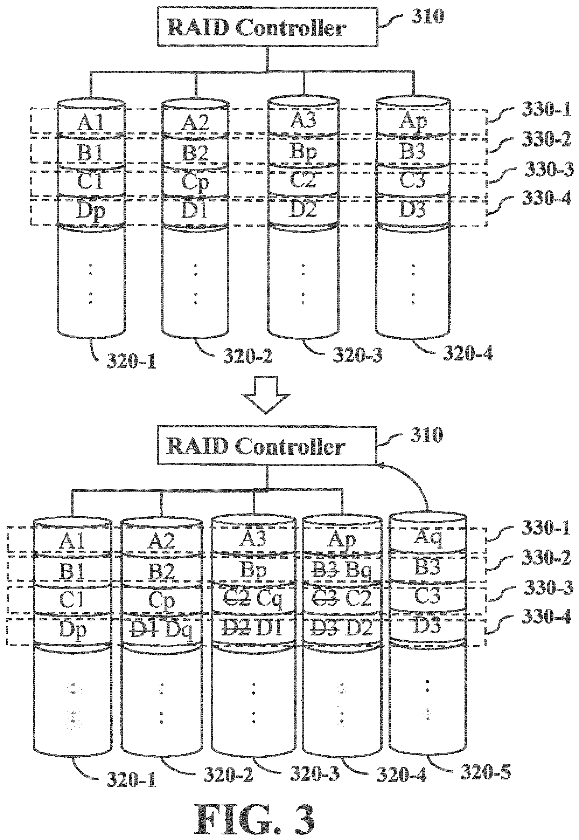

To improve the error tolerance capacity, a new drive may be added to a RAID 5 group to serve and the RAID 5 group is converted to a RAID 6 group. Then, a file system run on the processing unit 110 may initiate a RAID rebuild process to calculate parity information according to the associated data of the other drives and write the parity information into, or move relevant data from a specified drive to each chunk of the new drive stripe-by-stripe. FIG. 3 is a schematic diagram illustrating a rebuild process for converting a RAID 5 storage to a RAID 6 storage according to an embodiment of the invention. In the rebuild process, for example, parity information Aq associated with the data A1 to A3 is calculated by using an algorithm other than that calculating the parity information Ap, and the parity information Aq is written into the drive 320-5. The data B3 is moved from the second chunk of the drive 320-4 to the second chunk of the drive 320-5, parity information Bq associated with the data B1 to B3 is calculated using the algorithm and the parity information Bq is written into the second chunk of the drive 320-4 in replacement of the data B3. The data C3 is moved from the third chunk of the drive 320-4 to the third chunk of the drive 320-5, the data C2 is moved from the third chunk of the drive 320-3 to the third chunk of the drive 320-4 in replacement of the data C3, parity information Cq associated with the data C1 to C3 is calculated using the algorithm and the parity information Cq is written into the third chunk of the drive 320-3 in replacement of the data B2. The remaining operations may be deduced by analogy and are omitted for brevity. Although embodiments of the invention illustrate the conversion from RAID 5 to RAID 6 storage, those artisans may apply the invention to a RAID 0 to RAID 1, RAID 0 to RAID 2, or RAID 1 to RAID 5 conversion, or others, with relevant modifications and the invention should not be limited thereto. Note that, in a RAID conversion of some embodiments, two or more redundant drives may be added to serve as mirrors.

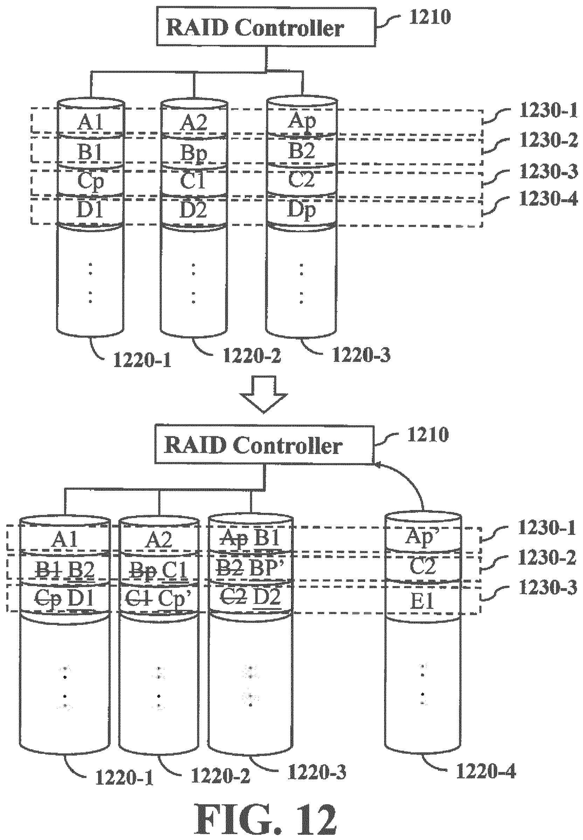

To increase the data storage capacity, a new drive may be added to a RAID 5 group to serve this purpose. Then, a user may interact with an UI (User Interface) to trigger a RAID expansion process. The RAID expansion process may rearrange and store each chunk data in a specified chunk of a specified drive, and recalculate and store each parity information in a specified chunk of a specified drive according to the associated data stripe-by-stripe. FIG. 12 is a schematic diagram illustrating an expansion process for adding a new drive to a RAID 5 group according to an embodiment of the invention. In the expansion process, for example, the data B1 is moved from the second chunk of the drive 1220-1 to replace the parity information Ap of the drive 1220-3, and the parity information Ap' is recalculated using the same algorithm according to the data A1, A2 and B1 and stored in the first chunk of the new drive 1220-4. The data B2 and C1 are moved from the second chunk of the drive 1220-3 and the third chunk of the drive 1220-2 to replace the data B1 and B2, respectively, the data C2 is copied from the third chunk of the drive 1220-3 and stored in the second chunk of the new drive 1220-4, the parity information Bp' is recalculated using the same algorithm according to the data B2, C1 and C2 to replace the original parity information Bp. The remaining operations may be deduced by analogy and are omitted for brevity. After that, about 50% space of the original RAID 5 storage is increased to store more data. Although embodiments of the invention illustrate the expansion for a RAID 5 system, those artisans may apply the invention to a RAID 0, 1, 5, 6 expansion, or others, with relevant modifications and the invention should not be limited thereto.

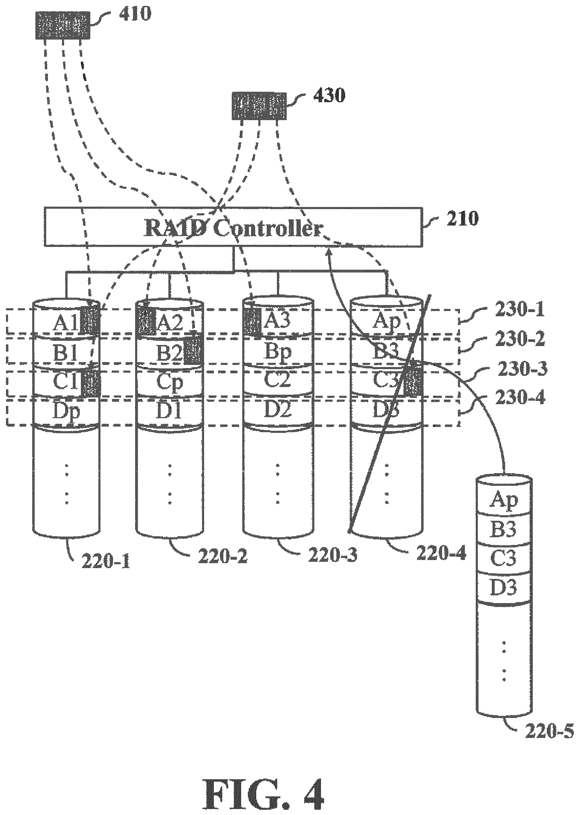

Storage Space fragmentation may occur when unused space, file system metadata, operating system metadata, or a single file are not contiguous. For example, a file system may allocate unused space for the data and its metadata when a file is created. The space they were allocated may be released for use by other files as files are deleted. When a file is created and there is not an area of contiguous space available for its initial allocation the space must be assigned in fragments. When a file or the metadata of the file system is modified to become larger it may exceed the space initially allocated to it. Additional space may be assigned elsewhere and the file or the metadata of the file system becomes fragmented. Following the case illustrated in FIG. 2, a RAID rebuild process of some implementations may calculate the content of the newly added drive file-by-file. FIG. 4 is a schematic diagram illustrating a RAID rebuild process in some implementations. A file 410 is divided into fragments and the fragments are distributed to store as portions of the data A1 of the drive 220-1, the data B2 of the drive 220-2 and the data A3 of the drive 220-3. A file 430 is segmented into fragments and the fragments are distributed to store as portions of the data A2 of the drive 220-2, the data C1 of the drive 220-1 and the data C3 of the failed drive 220-4. The RAID rebuild process may repeatedly execute a loop for calculating parity information or data of the drive 220-5 for all necessarily stripes until all files are processed. For example, in an iteration, the process may scan file allocation information, such as the content of a file allocation table or others, to determine that the file 410 is stored in certain portions of the stripes 230-1 and 230-2 and calculate parity information Ap of the stripe 230-1 and data B3 of the stripe 230-2 for the file 410. In the next iteration, the process may determine that the file 430 is stored in the stripes 230-1 and 230-3 and calculate parity information Ap of the stripe 230-1 and data C3 of the stripe 230-3 for the file 430. However, scanning the file allocation information for all files may consume excessive time when file fragmentation is too many. Moreover, the same data or parity information may be redundantly calculated in dealing with two or more files, resulting in lengthened rebuild time. For example, it is observed that the parity information Ap is calculated twice.

The RAID reconstruction process may include parallelly executed procedures: an unused-space scan and a stripe reconstruction. To shorten the reconstruction time, the unused-space scan procedure may scan unused-region information (may be represented in logical addresses) to determine which logical address range/ranges (hereinafter may also be referred to address range/ranges for brevity) that is/are candidate/candidates to be skipped for a RAID group and send hint requests with the logical address ranges to the stripe reconstruction procedure. Embodiments of the invention may introduce a stripe-by-stripe scheme to conduct a RAID reconstruction that is used in the stripe reconstruction procedure for calculating data or parity information and performing necessary data or parity movements between the drives of the RAID group. For example, the stripes 230-1, 230-2, and so on, are sequentially processed by the stripe reconstruction procedure. The stripe reconstruction procedure may continuously collect the logical address ranges sent from the unused-space scan procedure, determine which stripes of the drives of the RAID group are to be skipped from being reconstructed according to the collected logical address ranges, omit reconstructions to the determined stripes and reconstruct all rather than the determined stripes.

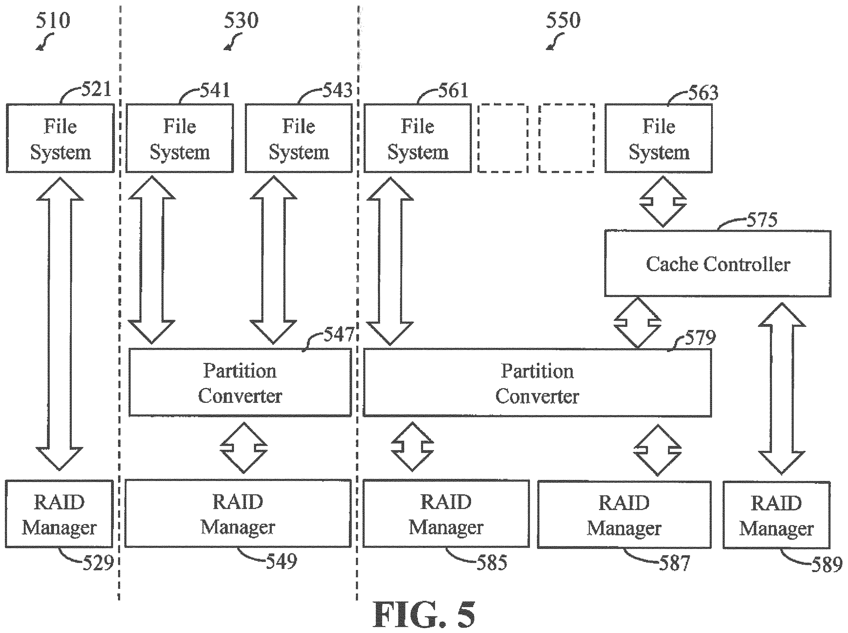

The aforementioned RAID reconstruction process may be applied in several software configurations depending on different hardware settings. FIG. 5 is a schematic diagram of software configurations according to embodiments of the invention. Three software configurations 510, 530 and 550 divided by vertical dashed lines are illustrated below:

The software configuration 510 may be employed in hardware environment that includes one RAID group. A RAID manager 529 may be used to perform a RAID reconstruction process in coordination with one file system 521. The file system 521 and the RAID manager 529 may be composed of software instructions with relevant data abstracts and can be loaded and executed by the processing unit 110 in a multitasking environment or in parallel executions of multiple tasks. Each of the file system 521 and the RAID manager 529 may include one or more software modules for performing designated operations. The RAID manager 529 may translate a logical address of a request sent by the file system 521 into a physical location and drive an associated RAID controller to perform a data access, such as a data read, write, movement, or others, on the physical location according to the request. In alternative embodiments, the RAID manager 529 may directly drive relevant drive(s) to perform a data access after the address translation so that the RAID controllers (for example, hardware-type RAID controllers) are absent from the system architecture. The file system 521 may implement an unused-space scan procedure while the RAID manager 529 may implement a stripe reconstruction procedure. The RAID manager 529 may send commands to drive a RAID controller of a RAID 1, 2, 5 or 6 group for reconstructing one or more stripes.

The software configuration 530 may be employed in hardware environment including one RAID group. Two file systems 541 and 543 may be employed in the same operating system (OS) or different OS, such as Microsoft Windows, and Linux. Each of the file systems 541 and 543 may implement an unused-space scan procedure. The partition converter 549 may assign an exclusive logical address range (hereinafter referred to as a visible address range) to each file system that is mapped to a respective portion of the storage space of the RAID group. The partition converter 549 may add an offset to a logical address sent from the file system 543, so as to convert the logical address to one of the visible address range. For example, suppose that a logical address range between 0 and 2047 is assigned to the file system 541 while a logical address range between 2048 and 4095 is assigned to the file system 543: For dealing with a data read request with a logical address 1000 from the file system 543, the partition converter 547 may add the offset 2048 to the address 1000 to become a new address 3048. The RAID manager 549 may translate a logical address of a request sent by the partition converter 547 into a physical location and drive an associated RAID controller to perform a data access operation, such as a data read, write, movement, or others, on the physical location according to the request. In alternative embodiments that the RAID controllers are absent from the system architecture, the RAID manager 549 may directly drive relevant drive(s) to perform a data access after the address translation. The file systems 541 and 543, the partition converter 547 and the RAID manager 549 may be composed of software instructions with relevant data abstracts and can be loaded and executed by the processing unit 110 in a multitasking environment or in parallel executions of multiple tasks. Each of the file systems 541 and 543 may implement an unused-space scan procedure in coordination with the partition converter 547 for determining unused address ranges. The RAID manager 529 may implement a stripe reconstruction procedure, in which collects unused address ranges from the partition converter 547, translates the unused address ranges into unused-stripes and skips the unused-stripes from being reconstructed. Each of the file systems 541 and 543, the partition converter 547, and the RAID manager 549 may be implemented in one or more software modules for performing designated operations. The partition converter 547 may be referred to as an intermediary layer. The RAID manager 549 may send commands to drive the associated RAID controller of a RAID 1, 2, 5 or 6 group for reconstructing one or more stripes. In alternative embodiments, the RAID manager 549 may directly drive relevant drive(s) for reconstructing one or more stripes so that the RAID controllers (for example, hardware-type RAID controllers) are absent from the system architecture.

The software configuration 550 may be employed in hardware environment including three RAID groups managed by the RAID managers 585, 587 and 589, respectively. Any RAID group may be configured as RAID 1, 2, 5 or 6. The partition converter 579 may mange a visible address range that is associated with a portion of storage space of a first RAID group implemented in HD drives through the RAID manager 585 while the other portion thereof is not used or assigned. The partition converter 579 may mange a visible address range that is associated with a portion of storage space of a second RAID group implemented in HD drives through the RAID manager 587 while the other portion thereof is not used or assigned. The RAID manager 589 may manage a third RAID group implemented in SSD drives for providing fast-access capability. Two file systems 561 and 563 may be employed in the same or different OS. The file system 561 may implement an unused-space scan procedure with the partition converter 579 and the operations are similar with that of the file system 541 with the partition converter 547. The cache controller 575 may detect frequently assessed data (hereinafter referred to as hot data) of the HD drives and advise a cache controller 575 to copy the hot data from the HD drives and write the copied data in the SSD drives as a cache mirror in coordination with the partition converter 579. The frequently assessed data may be defined as that has been assessed from the HD drives over a predefined number of times for the last time period, for example, the last n minutes, hours, days, months, or others, where n is a positive integer. For the newly detected hot data, the cache controller 575 may send a data read request with a logical address range indicated by the file system 563 to the partition converter 579 to obtain the hot data and send a data write request with the hot data to the RAID manager 589. After the hot data has been written successfully, the RAID manager 589 may respond to a logical address range corresponding to third RAID group. The cache controller 575 may maintain a cache table storing mappings between the logical addresses associated with the second and third RAID groups, respectively, for the hot data. In an embodiment, the hot data may need to write back to the HD drives. For example, the hot data stored in the SSD drives may be updated first, and the corresponding hot data stored in the HD drives are outdated. In this situation, the hot data is only available from the SSD drives unless the data is written back to the HD drives. For writing back the hot data, the cache controller 575 may send a data write request with a logical address range of the second RAID group indicated by the file system 563 to the partition converter 579 to update the data into HD drives. In another embodiment, when the hot data is updated, the hot data is updated to the SSD drives and the HDD drives approximately at the same time. In this situation, the cache controller 575 may send a data write request with a logical address range of the second RAID group indicated by the file system 563 to the partition converter 579 to write the hot data into HD drives and obtain a logical address range of the third RAID group according to the mappings of the cache table and send a data write request with the logical address range of the third RAID group to the RAID manager 589 to write the hot data into SSD. The file system 563 may implement an unused-space procedure with the cache controller 575 and the partition converter 579. The partition converter 579 may add an offset to a logical address indicated by the file system 561 or 563, so as to convert the logical address to one of the assigned address range. The offset may be set to zero if no conversion needs to perform.

The file systems 561 and 563, the cache controller 575, the partition converter 579, and the RAID managers 585, 587 and 589 may be composed of software instructions with relevant data abstracts and can be loaded and executed by the processing unit 110 in a multitasking environment or in parallel executions of multiple tasks. The file system 561 may implement the unused-space scan procedure in coordination with the partition converter 579 for determining unused address ranges. The file system 563 may perform similar scans in coordination with the partition converter 579 for determining unused address ranges. The cache controller 575 may implement an unused-space scan procedure to determine unused address ranges by searching the cache table. Each of the RAID managers 585 and 587 may implement a stripe reconstruction procedure, in which collects unused address ranges from the partition converter 579, translates the unused address ranges into unused-stripes and skips the unused-stripes from being reconstructed. The RAID manager 589 may implement a stripe reconstruction procedure to collect unused address ranges from the cache controller 575, translate the unused address ranges into unused-stripes and skip the unused-stripes from being reconstructed. Each of the file systems 561 and 563, the cache controller 575, the partition converter 579, and the RAID managers 585, 587 and 589 may be implemented in one or more software modules for performing designated operations. The cache controller 575 and the partition converter 579 may be referred to as an intermediary layer collectively. Each of the first to third RAID groups may be a RAID 1, 2, 5 or 6 group. In an embodiment, the RAID managers 585, 587 and 589 may send commands to drive the hardware-type RAID controllers associated with the first to third RAID groups, respectively, for reconstructing one or more stripes. In an alternative embodiment, the hardware-type RAID controllers are absent from the system architecture, and each of the RAID managers 585, 587 and 589 may be considered as software-type RAID controllers and can directly drive relevant drive(s) for reconstructing one or more stripes.

The unused-space scan procedure is compute-bound involving heavy calculations performed by the processing unit 110 while the stripe reconstruction procedure is IO-bound that predominantly uses peripherals, such as the HD, SSD drives, etc. Since the modules, such as the assembly of the file system 521 and the RAID manager 529, the assembly of the file systems 541 and 543, the partition converter 545 and the RAID manager 549, the assembly of the file systems 561 and 563, the cache controller 575, the partition converter 579 and the RAID managers 585, 587 and 589, etc., may be run in a multitasking environment or in parallel executions of multiple tasks, the unused-space scan and the stripe reconstruction procedures can be realized parallelly to improve the overall performance. At least two processing units may be required to execute multiple tasks in parallel.

Any of the file systems 521, 541, 543, 561 and 563 may be, but not limited to, NTFS (New Technology File System), FAT (File Allocation Table), exFAT (extended File Allocation Table), ext4 (extended file system 4), or Btrfs (B-tree file system). The file system may organize files and directories and keep track of which regions of the storage media belong to which file and which regions thereof are not been used. Note that the file system run on the processing unit 110 may provide an API (Application Programming Interface) to interact with an application to perform file operations, such as a file open, close, read or write, a RAID reconstruction, etc. The application may provide a man-machine interface (MMI) including graphical user interface (GUI) displayed on the display unit 120 and the input devices 130 that handles human-machine interaction. A user may operate the MMI to trigger a RAID reconstruction process.

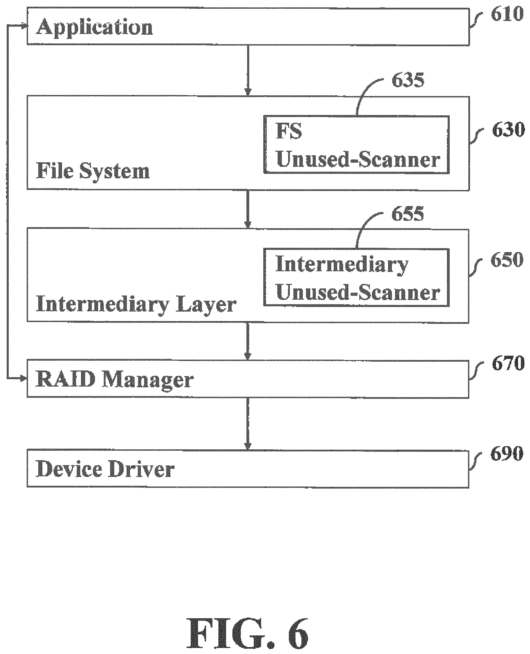

FIG. 6 is schematic diagram of the software architecture according to embodiments of the invention. An input and output (I/O) system may be divided into layers, such as a file system 630, an intermediary layer 650, a RAID manager 670 and a device driver 690. Each of the I/O layers may specify the shared communications protocols and interface methods used by its upper layer.

The file system 630 may include a FS unused-scanner 635 implementing an unused-space scan procedure. The file system 630 may update unused-region information stored in the memory 150 each time a portion of unused space has been allocated for a file, or a portion of used space has been released for use by other files. The unused-region information may periodically be flushed to the storage device 140, so as to be recovered from the storage device 140 once an unexceptional power down or off occurs. Or, the unused-region information may be flushed on demand. The FS unused-scanner 635 determines the logical address range/ranges that is/are candidates to be skipped by searching the unused-region information. In alternative embodiments, a plug-in scanner, which is composed of software instructions or program code with relevant data abstracts and is developed by a third party, may be downloaded from a server through Internet and may coordinate with the file system 630 in execution by the processing unit 110 to obtain the unused-region information. The unused-space scan procedure may be implemented in the plug-in scanner to request the file system 630 for the unused-region information, obtain the unused-region information from replied results sent by the file system 630 and determine the logical address range/ranges of the obtained unused-region information that is/are candidates to be skipped. The unused-region information may be implemented in a table, a tree, a bitmap, or any combinations thereof, or others.

The following introduces an exemplary implementation combining a table with bitmaps. Table 1 shows an exemplary combination:

**Table 1**

| Start Address | Length | Bitmap Flag | Bitmap ID |
|---|---|---|---|
| 0 | 256 | 0 | NULL |
| 800 | 20 | 0 | NULL |
| 1100 | 128 | 1 | 0 |
| 1300 | 256 | 0 | NULL |
| 1700 | 256 | 0 | NULL |

Each entry of Table 1 may store information about continuous free space represented by a start address and a length (such as a number of blocks, sectors, bytes, etc.) or a linkage to a bitmap associated with an address range. The entries may be sorted in an ascending or descending order according to their start addresses. If a continuous space is fragmented and messy, the file system 630 may use a bitmap to record that each data unit of the address range, such as a block, a sector, etc., is free or occupied. A bitmap flag of each entry indicates whether a bitmap is used to represent the free space of the associated address. If so, the bitmap flag is set to one, otherwise, to zero. For example, a bitmap is used to represent the free space of the 128 sectors from address 1100. The bitmap may include a bit sequence of 128 bits, in which each bit being 0 indicates that the corresponding data unit is unused while being 1 indicates that the corresponding data unit has been occupied. The unused regions include 256 sectors from the address 0, 20 sectors from the address 800, 256 sectors from the address 1300 and 256 sectors from the address 1700.

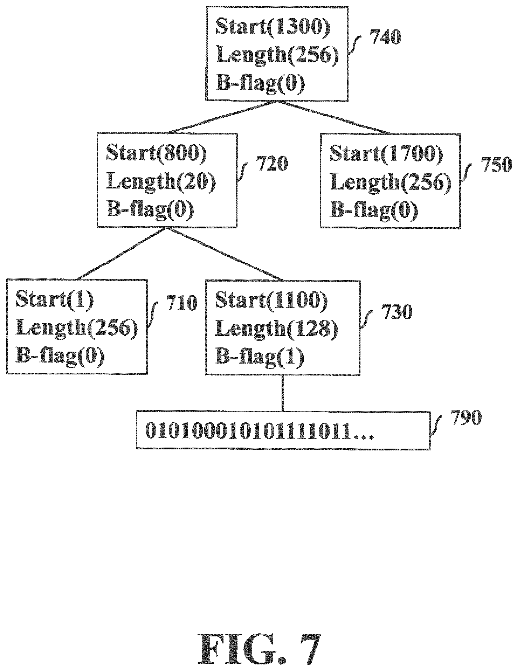

FIG. 7 is a schematic diagram illustrating a binary tree combining with bitmaps according to an embodiment of the invention. Each of nodes 710 to 750 records an address range represented by a start address denoted as Start(i) and a length denoted as Len(j), and a bitmap flag denoted as B-flag(k), where i and j are integers, and k is set to 0 or 1. Each node may have at most two child nodes, referred to as a left child including a smaller start address and a right child including a greater start address. B-flag(1) indicates that the free space of the associated address range is additionally represented by a bitmap, otherwise, is not. For example, the node 730 indicates that the free space of 128 data units from the address 1100 is represented in a bitmap 790 including a bit sequence of 128 bits, in which each bit being 0 indicates that the corresponding data unit is unused while being 1 indicates that the corresponding data unit has been occupied. Those artisans may modify the binary tree with other types of tree structure, such as b-tree, etc., in conjunction with bitmaps.

The unused-region information, in alternative information, may be implemented in a large bitmap including a bit sequence of n bits, where n represents a total amount of data units that the file system 630 manages.

In alternative embodiments, the intermediary layer 650 may include an intermediary unused-scanner 655 implementing an unused-space scan procedure. The intermediary layer 650 may be any partition converter as shown in FIG. 5. The whole storage space of a RAID group may be divided into multiple partitions. One or more partitions may be formatted for storing user data and the remaining (i.e. unformatted) partition(s) are referred to as unused partition(s). Profile information about a logical address range of each of the formatted and unused partitions, for example, including a start offset and a length for each corresponding partition, is stored in a system region of the RAID group. The partition converter may read the profile information from the system region of the RAID group, obtain the unused-region information therefrom and determine the logical address range of an unused partition that is a candidate to be skipped for the RAID group. The intermediary layer 650 may be the cache controller 575 as shown in FIG. 5. Each time receiving a response indicating that hot data has been successfully written in a logical address range corresponding to the third RAID group, the cache controller 575 may update unused-region information stored in the memory 150 accordingly. The unused-region information may be implemented in a table, a tree, a bitmap, or any combinations thereof, or others. The exemplary references of the unused-region information may be made to the above paragraphs, such as relevant descriptions of Table 1, FIG. 7, or others, and are omitted for brevity. The unused-space scan procedure may determine logical address range/ranges that is/are candidate/candidates to be skipped for the associated RAID group by searching the unused-region information.

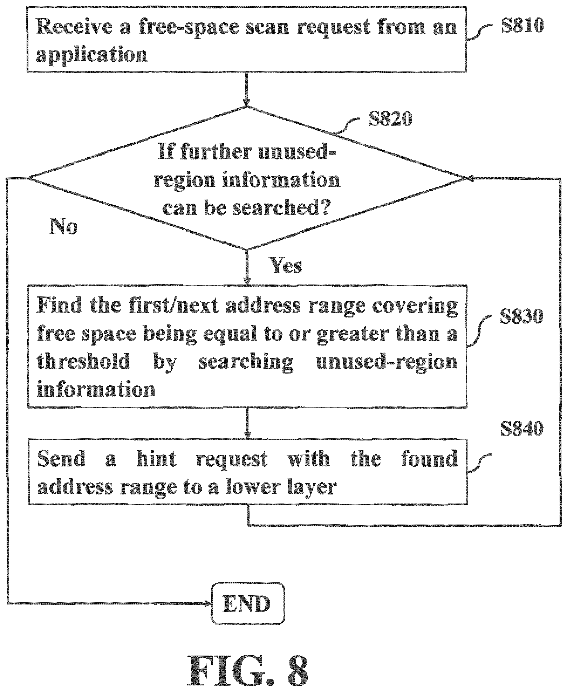

FIG. 8 is a flowchart illustrating a method for scanning unused regions, performed by the FS unused-scanner 635 or the intermediary unused-scanner 655 when being loaded and executed by the processing unit 110, according to an embodiment of the invention. After a free-space scan request is received from the application 610 (step S810), a loop may be repeatedly executed (steps S820 to S840) until no further unused-region information can be searched (the "No" path of step S820), for example, all entries of Table 1 have been processed, all nodes of FIG. 7 have been traversed, or others. In each iteration, the first or next address range covering free space being equal to or greater than a threshold may be found by searching the unused-region information (step S830) and a hint request with the found address range may be sent to a lower layer to inform the lower layer that the address range is a candidate to be skipped from being reconstructed (step S840). In step S830, the threshold may be set to a length of all data chunks of one stripe or more, so as to avoid unnecessary computations performed by the stripe reconstruction procedure. Each found address range may be represented in a start address and an end address, or a start address and a length. The hint request may be carried in a proprietary I/O instruction. The lower layer may be the RAID manager 670 and the found address range is directly passed down to the RAID manager 670. Alternatively, the lower layer may be a partition converter. The partition converter adds an offset to each logical address of the found address range sent from the file system 630 to become a converted address range and sends a hint request with the converted address range to the RAID manager 670.

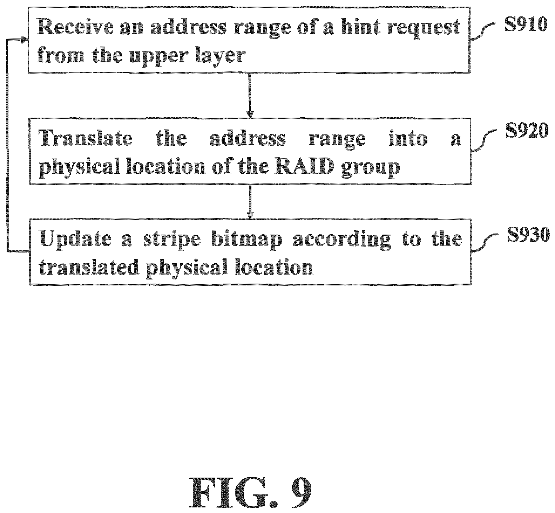

Once a hint request is received, a handler of the RAID manager 670, or others, may be triggered to mark unused stripes. FIG. 9 is a flowchart illustrating a method for marking unused stripes, performed by a handler when being loaded and executed by the processing unit 110, according to an embodiment of the invention. After receiving an address range of a hint request from the upper layer (step S910), the RAID manager 670 may translate the address range into one or more physical locations of the associated RAID group (step S920) and generate a stripe bitmap according to the translated physical locations (step S930). Specifically, in step S930, a RAID bitmap is updated first. Each cell of the RAID bitmap stores a value indicating whether an associated chunk is used, where "1" represents that the associated chunk is used, otherwise, is unused. Each cell is initially set to 1. Table 2 shows an exemplary partial RAID bitmap associated with the RAID group as shown in FIG. 2:

**Table 2**

| | | |
|---|---|---|
| 1 | 1 | 1 |
| 1 | 1 | 1 |
| 1 | 1 | 1 |
| 1 | 1 | 1 |

The cells are associated with the chunks A1 to D3 in sequence. For example, when an address range of a hint request is translated into the chunks A3 to D1, the exemplary partial RAID bitmap of Table 3 is modified to become Table 3:

**Table 3**

| | | |
|---|---|---|
| 1 | 1 | 0 |
| 0 | 0 | 0 |
| 0 | 0 | 0 |
| 0 | 1 | 1 |

The cell associated with each of the chunks A3 to D1 is set to 0. After that, a stripe bitmap is updated according to the RAID bitmap. Each cell of the stripe bitmap stores a value indicating whether an associated stripe is used, where "1" represents that the associated stripe is used, otherwise, is unused. Each cell is initially set to 1. Table 4 shows an exemplary partial stripe bitmap that is generated according to the RAID bitmap as shown in Table 3:

**Table 4**

| |
|---|
| 1 |
| 0 |
| 0 |
| 1 |

Since the chunks A1, A2, D2 and D3 are used, the stripes 230-1 and 230-4 cannot be marked as unused that are indicated in the first and fourth cells. Conversely, the stripes 230-2 and 230-3 are marked as unused that are indicated in the second to third cells because all data chunks of the stripes are unused. Note that those artisans may modify the stripe bitmap to a different data structure, such as a tree, a linked list, etc., to convey the unused-stripe information, and the invention should not be limited thereto.

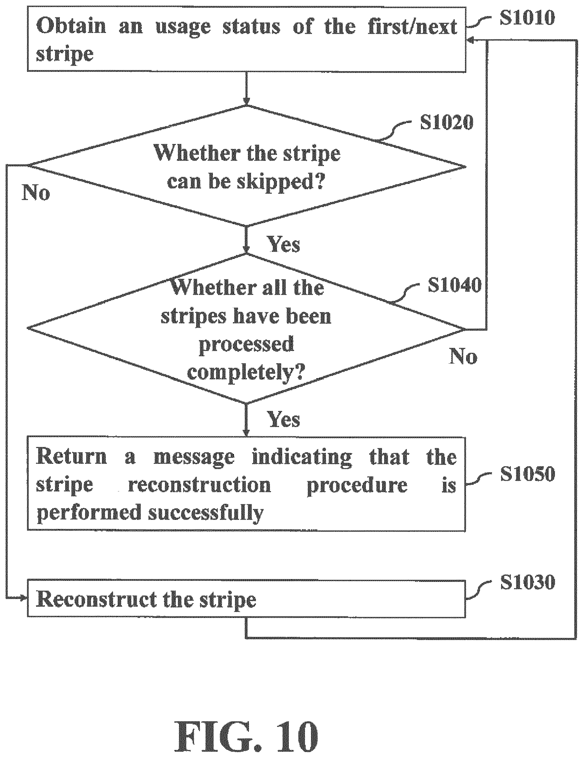

The RAID manager 670 may implement a stripe reconstruction procedure for skipping unused stripes with references made to the hint requests sent by the upper layer(s) and reconstructing all the other stripes. FIG. 10 is a flowchart illustrating a method for reconstructing stripes of a RAID group, performed by the RAID manager 670 when being loaded and executed by the processing unit 110, according to an embodiment of the invention. A loop (steps S1010 to S1040) is repeated executed until all the stripes of the associated RAID group have been processed completely (the "Yes" path of S1040). In each iteration, the RAID manager 670 may obtain usage statuses of the first or next stripe of the RAID group from the stripe bitmap (step S1010) and determine whether the stripe can be skipped (step S1020). If so, the stripe is skipped from being reconstructed to save time and calculation capacity. Otherwise, a device driver 690 may interact with a specified RAID controller of the RAID group or directly instruct all drives of the RAID group to reconstruct the stripe (step S1030). The stripe reconstruction procedure may be applied to a failover process as shown in FIG. 2, a RAID conversion as shown in FIG. 3 or a RAID expansion as shown in FIG. 12. Detailed examples for reconstructing a stripe may refer to relevant passages associated with FIGS. 2, 3 and 12. After all the stripes have been processed completely (the "Yes" path of step S1040), a message indicating that the stripe reconstruction procedure is performed successfully is returned to the application 610 and the stripe reconstruction procedure ends (step S1050). Note that a scanning order performed by unused-space scan procedure in the FS unused-scanner 635 and/or the intermediary unused-scanner 655 may conform to a rebuild order performed by the stripe reconstruction procedure of the RAID manager 670. For example, from the first to the last logic addresses that the FS unused-scanner 635 and the intermediary unused-scanner 655 detect unused address range while from the first to the last stripes that the RAID manager 670 performs stripe reconstructions, and vice versa. However, it is tolerable that one or more unused stripes may not be skipped from being reconstructed when the hint request(s) generated by the FS unused-scanner 635 or the intermediary unused-scanner 655 is(are) too late to be detected by the RAID manager 670. Note that the reconstructed stripe is locked from being accessed by any other drivers, programs or applications to avoid an interference with the RAID reconstruction process.

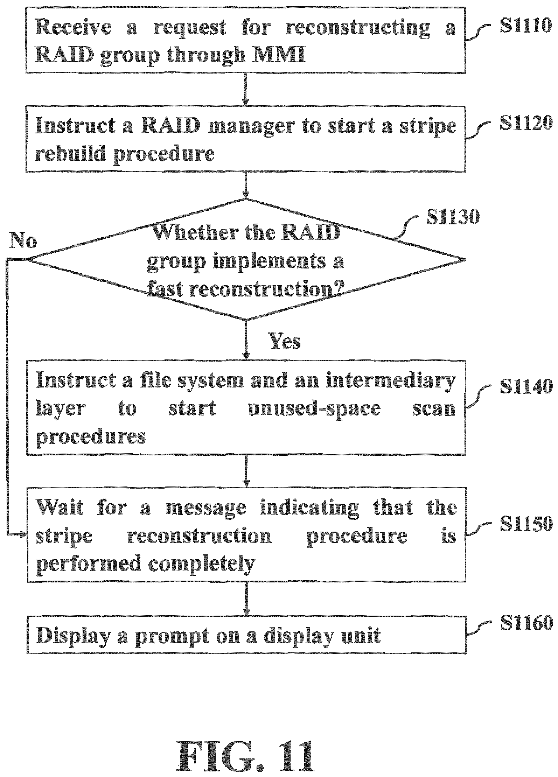

Embodiments of the invention introduce a method for activating the stripe reconstruction and the unused-space scan procedures. FIG. 11 is a flowchart illustrating a method for a RAID reconstruction, performed by the application 610 when being loaded and executed by the processing unit 110, according to an embodiment of the invention. After receiving a request for reconstructing a RAID group through MMI (step S1110), the application 610 may instruct the RAID manager 670 to start a stripe reconstruction procedure as shown in FIG. 10 through a local procedure call (LPC), an advanced local procedure call (ALPC), a native or proprietary function call, or others (step S1120) and determines whether the RAID group supports a fast reconstruction (step S1130). The application 610 may store features of RAID groups in the memory 150 and one feature indicates whether the associated RAID group supports the fast reconstruction. When a RAID group supports a fast reconstruction, a RAID manager associated with the RAID group implements the aforementioned stripe reconstruction procedure including operations for skipping the unused stripes from being reconstructed and an intermediary layer associated with the RAID group implements the aforementioned unused-space scan procedure. When the RAID group implements a fast reconstruction (the "Yes" path of step S1130), the application 610 may instruct the file manager 630 and the intermediary layer 650 to start unused-space scan procedures as shown in FIG. 8, through LPCs, ALPCs, native or proprietary function calls, or others, respectively, for the RAID group (step S1140) and waits for a message indicating that the stripe reconstruction procedure is performed completely (step S1150). After receiving the message from the RAID manager 670, the application 610 may display a prompt on the display unit 120 to advise a user that the RAID reconstruction has completed (step S1160). During the stripe reconstruction procedure, the RAID manager 670 may periodically transmit a percentage or a total number of stripes has been rebuilt successfully to the application 610 and the application 610 may modify a status bar displayed on the display unit 120 accordingly.

Although embodiments of the invention describe that the application 610, the FS unused-scanner 635, the intermediary unused-scanner 655 and the RAID manager 670 are run by the same processing unit 110, those artisans may devise the software deployment to install the application 610 in a remote client rather than being bundled with the FS unused-scanner 635, the intermediary unused-scanner 655 and the RAID manager 670. The application 610 may start the stripe reconstruction procedure of the RAID manager 670, and the unused-space scan procedures of the FS unused-scanner 635 and the intermediary unused-scanner 655 through a remote procedure call (RPC), or others.

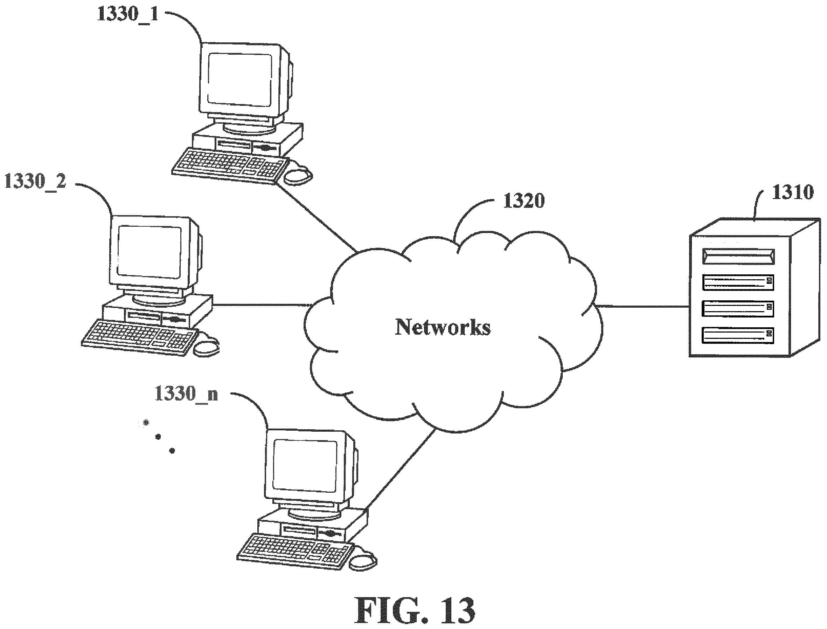

An embodiment of the invention introduces network architecture containing clients and a storage server that can enable location-independent data storage and retrieval. FIG. 13 is a schematic diagram of the network architecture according to an embodiment of the invention. The storage server 1310 may provide storage capacity for storing data that are received from the clients 1330_1 to 1330_n, where n is an arbitrary positive integer. Any of the clients 1330_1 to 1330_n may access to the storage server 1310 after being authenticated by the storage server 1310. The storage server 1310 may request an ID (Identification) and a password from the requesting client before accessing to the storage server 1310. The requesting client may store or read data in or from the storage server 1310 via the networks 1320, where the networks 1320 may include a Local Area Network (LAN), a wireless telephony network, the Internet, a Personal Area Network (PAN) or any combination thereof. The storage server 1310 may be practiced in the storage system as shown in FIG. 1. Although embodiments of the clients 1330_1 to 1330_n of FIG. 13 show Personal Computers (PCs), any of the clients 1330_1 to 1330_n may be practiced in a laptop computer, a tablet computer, a mobile phone, a digital camera, a digital recorder, an electronic consumer product, or others, and the invention should not be limited thereto.

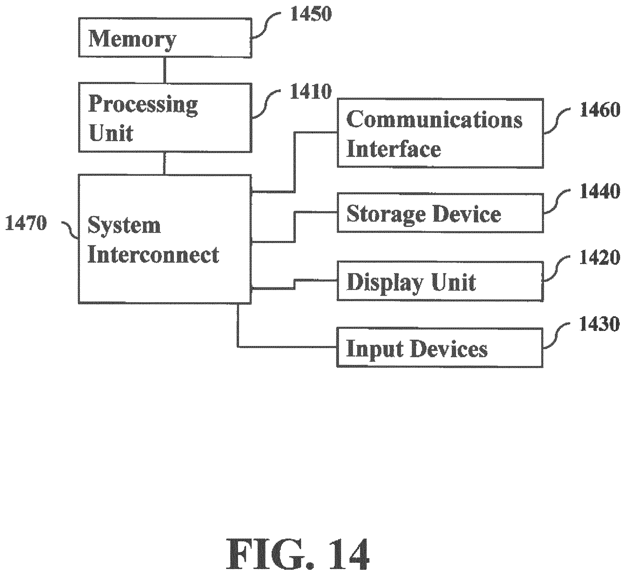

FIG. 14 is the system architecture of a client according to an embodiment of the invention. The hardware circuits, characteristics and functionalities of components 1410 to 1470 may refer to relevant descriptions of the processing unit 110, the display unit 120, the input device 130, the storage device 140, the memory 150, the communications interface 160 and the system interconnect 170, respectively, as shown in FIG. 1.

With the capacity of a storage server being shared by multiple clients, the software configuration 530 as shown in FIG. 5 may be modified to fit into the client-server architecture as shown in FIG. 13 for a RAID rebuild, conversion or expansion process, or others. The processing unit 1410 of each client may run a file system and the client may be referred to as a remote client. Under the file system, Internet Small Computer Systems Interface (iSCSI), which is an Internet Protocol (IP)-based storage networking standard for linking data storage facilities, may be used to provide data access to the storage server 1310 by carrying SCSI commands over the networks 1320. Each SCSI command may encapsulate a data read, write, delete request with a logical address range. For example, the file system 541 may be run on the client 1330_1 and the file system 543 may be run on the client 1330_2. The RAID manager 549 may assign an exclusive logical address range (hereinafter referred to as a visible address range) to each file system that is mapped to a respective portion of the storage space of the RAID group. The partition converter 549 may obtain the logical address ranges of the SCSI commands sent from the clients, add a first offset to each logical address of the SCSI commands sent by the client 1330_1 and add a second offset to each logical address of the SCSI commands sent by the client 1330_2, so as to convert each logical address to one of the corresponding visible address range according to which client issues the SCSI command. Suppose that a logical address range between 2048 and 4095 is assigned to the file system 541 while a logical address range between 4096 and 8191 is assigned to the file system 543: For dealing with a data read request with a logical address 1000 of a SCSI command sent by the client 1330_1, the partition converter 547 may add the offset 2048 to the address 1000 to become a new address 3048. For dealing with a data read request with a logical address 1000 of a SCSI command sent by the client 1330_2, the partition converter 547 may add the offset 4096 to the address 1000 to become a new address 4196. The SCSI commands including the converted logical address ranges are pass down to the RAID manager 549.

The file system may be run on each remote client while the partition converter 547 and the RAID manager 549 may be run on the storage server 1310. Each file system may update unused-region information stored in a memory each time a portion of unused space has been allocated for a file, or a portion of used space has been released for use by other files. In some embodiments, each file system may include a FS unused-scanner implementing an unused-space scan procedure to determine the logical address range/ranges that is/are candidates to be skipped by searching the unused-region information. The detailed operations may refer to relevant descriptions of the FS unused-scanner 635 and are omitted for brevity. In alternative embodiments, a plug-in scanner, which is composed of software instructions or program code with relevant data abstracts and is developed by a third party, may be downloaded from a server through Internet and may coordinate with a file system in execution to obtain the unused-region information. The unused-space scan procedure may be implemented in the plug-in scanner to request the file system for the unused-region information, obtain the unused-region information from replied results sent by the file system and determine the logical address range/ranges of the obtained unused-region information that is/are candidates to be skipped. A hint request with an unused address range generated by the FS unused-scanner or the plug-in scanner is encapsulated in a SCSI command and the SCSI command is sent to the storage server 1310 through the networks 1320. The partition converter 549 may obtain the hint request with the unused address range from the SCSI commands sent from the clients, convert each logical address of the hint requests to one of the corresponding visible address range according to which client issues the SCSI command and send the converted hint request to the stripe reconstruction procedure of the RAID manager 549. The stripe reconstruction procedure may continuously collect the converted logical address ranges with the hint requests, determine which stripes of the drives of the RAID group are to be skipped from being reconstructed according to the collected logical address ranges, omit reconstructions to the determined stripes and reconstruct all rather than the determined stripes.

Moreover, the aforementioned adaptations to the unused-space scan procedure and the stripe reconstruction procedure to conform to the network architecture that storage capacity of the storage server 1310 shared by multiple clients 1330_1 to 1330_n may also be applied in the software configurations 550 with analogous modifications for a RAID rebuild, conversion or expansion process, or others.

With the capacity of the storage server 1310 being accessed by a single client, the software configuration 510 as shown in FIG. 5 may be modified analogously to fit into the client-server architecture as shown in FIG. 13 for a RAID rebuild, conversion or expansion process, or others.

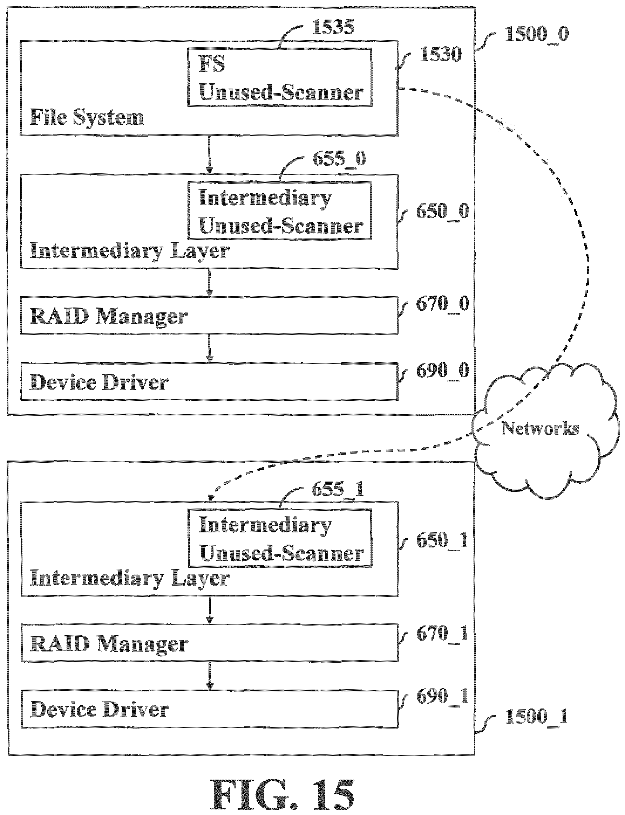

The unused-space scan procedure and the strip reconstruction procedure may be applied in a distributed replicated storage system, such as Distributed Replicated Block Device (BRBD) for a RAID rebuild, conversion or expansion process, or others. FIG. 15 is a schematic diagram of software configurations employed in a distributed replicated storage system according to embodiments of the invention. The distributed replicated storage system includes a primary node 1500_0 and a secondary node 1500_1 and the nodes are connected each other through networks. The primary node 1500_0 is operated in an active mode while the secondary node 1500_1 is operated in a standby mode. The system architecture as shown in FIG. 1 may be applied in each of the nodes 1500_0 and 1500_1. Note that the configuration of RAID group(s) of the secondary node 1500_1 is identical to that of the primary node 1500_0, thereby enabling the two nodes to form a storage cluster. Commands for writing data into a logical address range of a RAID group of the primary node 1500_0 are transferred to the RAID manager 670_0 and are simultaneously propagated to the secondary node 1500_1 through the networks, making data is consistently stored in the RAID groups of the nodes 1500_0 and 1500_1. Once the primary node 1500_0 has failed, a cluster management process is performed to promote the secondary node 1500_1 to operate in an active state.

The intermediary layer 650_1, the RAID manager 670_1 and the device driver 690_1 run on the secondary node 1500_1 are identical to the intermediary layer 650_0, the RAID manager 670_0 and the device driver 690_0, respectively. The file system 1530 is run on the primary node 1500_0 when the primary node 1500_0 is operated in an active mode. The file system 1530 may update unused-region information stored in a memory each time a portion of unused space has been allocated for a file, or a portion of used space has been released for use by other files. In some embodiments, the file system 1530 may include a FS unused-scanner implementing an unused-space scan procedure to determine the logical address range/ranges that is/are candidates to be skipped by searching the unused-region information. The detailed operations may refer to relevant descriptions of the FS unused-scanner 635 and are omitted for brevity. In alternative embodiments, a plug-in scanner, which is composed of software instructions or program code with relevant data abstracts and is developed by a third party, may be downloaded from a server through Internet and may coordinate with the file system 1530 in execution to obtain the unused-region information. The unused-space scan procedure may be implemented in the plug-in scanner to request the file system 1530 for the unused-region information, obtain the unused-region information from replied results sent by the file system 1530 and determine the logical address range/ranges of the obtained unused-region information that is/are candidates to be skipped. A hint request with an unused address range generated by the FS unused-scanner 1530 or the plug-in scanner may be transferred to the intermediary layer 650 0 and simultaneously transmitted to intermediary layer 650_1 of the secondary node 1500_1 through the networks. In alternative embodiments, the intermediary layer 650_0 and 560_1 may be absent from the software configuration, a hint request with an unused address range may be transferred to the RAID manager 670_0 and simultaneously transmitted to RAID manager 670_1 of the secondary node 1500_1 through the networks. References made to the intermediary layers 650_0 and 650_1, the intermediary unused-scanners 655_0 and 655_1, the RAID managers 670_0 and 670_1 and the device drivers 690 0 and 690_1 may be referred to relevant passages described with FIG. 5. Each of the RAID managers 670 0 and 670 1 may implement a stripe reconstruction procedure to continuously collect the (converted) logical address ranges with the hint requests, determine which stripes of the drives of the RAID group are to be skipped from being reconstructed according to the collected logical address ranges, omit reconstructions to the determined stripes and reconstruct all rather than the determined stripes.

Some or all of the aforementioned embodiments of the method of the invention may be implemented in a computer program such as an operating system for a computer, a driver for a dedicated hardware of a computer, or a software application program. Other types of programs may also be suitable, as previously explained. Since the implementation of the various embodiments of the present invention into a computer program can be achieved by the skilled person using his routine skills, such an implementation will not be discussed for reasons of brevity. The computer program implementing some or more embodiments of the method of the present invention may be stored on a suitable computer-readable data carrier such as a DVD, CD-ROM, USB stick, a hard disk, which may be located in a network server accessible via a network such as the Internet, or any other suitable carrier.

The computer program may be advantageously stored on computation equipment, such as a computer, a notebook computer, a tablet PC, a mobile phone, a digital camera, a consumer electronic equipment, or others, such that the user of the computation equipment benefits from the aforementioned embodiments of methods implemented by the computer program when running on the computation equipment. Such the computation equipment may be connected to peripheral devices for registering user actions such as a computer mouse, a keyboard, a touch-sensitive screen or pad and so on.

Although the embodiment has been described as having specific elements in FIG. 1, it should be noted that additional elements may be included to achieve better performance without departing from the spirit of the invention. While the process flows described in FIGS. 8 to 11 include a number of operations that appear to occur in a specific order, it should be apparent that these processes can include more or fewer operations, which can be executed serially or in parallel (e.g., using parallel processors or a multi-threading environment).

The invention is defined and limited only by the scope of appended claims.

## Claims

1. An apparatus for a redundant array of independent disk (RAID) reconstruction, **characterized by** comprising:
a RAID group comprising a plurality of drives (180-1-1∼180-1-n(1); 180-m-1∼180-m-n(m)); and
a processing unit (110; 1410), coupled to the RAID group, for starting an unused-space scan procedure to determine a logical address range that is a candidate to be skipped for the RAID group and send the logical address range to a stripe reconstruction procedure; and starting the stripe reconstruction procedure to receive the logical address range from the unused-space scan procedure, determine a stripe (230-1; 230-2; 230-3; 230-4; 330-1; 330-2; 330-3; 330-4; 1230-1; 1230-2; 1230-3; 1230-4) of the drives (180-1-1∼180-1-n(1); 180-m-1∼180-m-n(m)) to be skipped from being reconstructed according to the logical address range, and omit a reconstruction to the determined strip.

2. The apparatus of claim 1, **characterized in that** the unused-space scan procedure is performed to determine which logical address ranges that are candidates to be skipped for the RAID group and send the logical address ranges to the stripe reconstruction procedure; and the stripe reconstruction procedure is performed to receive the logical address ranges from the unused-space scan procedure, determine one or more stripes of the drives (180-1-1∼180-1-n(1); 180-m-1∼180-m-n(m)) to be skipped from being reconstructed according to the logical address ranges, omit reconstructions to the determined stripes and reconstruct all rather than the determined stripes.

3. The apparatus of claim 1 or 2, **characterized in that** the unused-scanned procedure is implemented in a file system (521; 541; 543; 561; 563; 630; 1535), the file system (521; 541; 543; 561; 563; 630; 1535) updates unused-region information stored in a memory (150; 1450) each time a portion of unused space has been allocated for a file, or a portion of used space has been released for use by other files, and the unused-scanned procedure determines a first logical address range that is a candidate to be skipped for the RAID group by searching the unused-region information.

4. The apparatus of claim 3, **characterized in that** the file system (521; 541; 543; 561; 563; 630; 1535) sends a first hint request with the first logical address range to a partition converter (547; 579) and the partition converter (547; 579) adds an offset to the first logical address range to become a second logical address range and sends a second hint request with the second logical address range to the stripe reconstruction procedure.

5. The apparatus of claim 1 or 2, **characterized in that** storage space of the RAID group is divided into multiple partitions and each partition is formatted or unused, the unused-scanned procedure is implemented in a partition converter (547; 579) and the unused-scanned procedure determines the logical address range of an unused partition that is a candidate to be skipped for the RAID group.

6. The apparatus of claim 1, 2 or 3, **characterized in that** the unused-scanned procedure is implemented in a cache controller (575), each time hot data has successfully written in the RAID group as a cache mirror the cache controller (575) updates unused-region information stored in a memory (150; 1450), and the unused-scanned procedure determines the logical address range that is a candidate to be skipped for the RAID group by searching the unused-region information.

7. The apparatus of claim 6, **characterized in that** the RAID group comprises a plurality of solid state disk (SSD) drives, and the hot data is copied from other RAID group comprising a plurality of hard disk (HD) drives.

8. The apparatus of claim 7, **characterized in that** the hot data has been accessed from the HD drives over a predefined number of times for a time period.

9. The apparatus of claim 1, 2, 3, 4, 5, 6, 7 or 8, **characterized in that** the logical address range covering space being equal to or greater than a length of all data chunks of one stripe of the RAID group.

10. The apparatus of claim 1, 2, 3, 4, 5, 6, 7, 8 or 9, **characterized in that** the unused-space scan procedure and the stripe reconstruction procedure are executed in parallel.

11. The apparatus of claim 1, 2, 3, 4, 5, 6, 7, 8, 9 or 10, **characterized in that** the unused-space scan procedure and the stripe reconstruction procedure are run in a multitasking environment, or in parallel executions of two tasks.

12. The apparatus of claim 1, 2, 3, 4, 5, 6, 7, 8, 9, 10 or 11, **characterized in that** a scanning order performed by the unused-space scan procedure conforms to a reconstruction order performed by the stripe reconstruction procedure.

13. The apparatus of claim 12, **characterized in that** the stripe reconstruction procedure uses a stripe-by-stripe scheme to conduct a RAID reconstruction.

14. The apparatus of claim 1, 2, 5, 6, 7, 8, 9, 10, 11, 12 or 13, **characterized in that** a file system (521; 541; 543; 561; 563; 630; 1535) updates unused-region information stored in a memory (150; 1450) each time a portion of unused space has been allocated for a file, or a portion of used space has been released for use by other files, the unused-scanned procedure is implemented in a plug-in scanner, and the unused-scanned procedure requests the file system (521; 541; 543; 561; 563; 630; 1535) for a first logical address range that is a candidate to be skipped for the RAID group and obtains the first logical address range from a replied result sent by the file system (521; 541; 543; 561; 563; 630; 1535).

15. A non-transitory computer program product for a redundant array of independent disk (RAID) reconstruction when executed by a processing unit (110; 1410) coupled to a RAID group comprising a plurality of drives (180-1-1∼180-1-n(1); 180-m-1∼180-m-n(m)), the computer program product **characterized by** comprising program code to:
start an unused-space scan procedure to determine a logical address range that is a candidate to be skipped for the RAID group and send the logical address range to a stripe reconstruction procedure; and
start the stripe reconstruction procedure to receive the logical address range from the unused-space scan procedure, determine a stripe (230-1; 230-2; 230-3; 230-4; 330-1; 330-2; 330-3; 330-4; 1230-1; 1230-2; 1230-3; 1230-4) of the drives (180-1-1∼180-1-n(1); 180-m-1∼80-m-n(m)) to be skipped from being reconstructed according to the logical address range, and omit a reconstruction to the determined strip.
